(19) Europäisches Patentamt
European Patent Office
Office européen des brevets

(11) **EP 4 075 315 A1**

(12) **EUROPEAN PATENT APPLICATION**
published in accordance with Art. 153(4) EPC

(43) Date of publication:
**19.10.2022 Bulletin 2022/42**

(51) International Patent Classification (IPC):
**G06F 30/00** (2020.01)

(21) Application number: **19956120.0**

(52) Cooperative Patent Classification (CPC):
**G06F 30/00**

(22) Date of filing: **27.12.2019**

(86) International application number:
**PCT/KR2019/018580**

(87) International publication number:
**WO 2021/117965 (17.06.2021 Gazette 2021/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **13.12.2019 KR 20190166615**

(71) Applicant: **E8Ight Co., Ltd**
**Gyeonggi-do 13477 (KR)**

(72) Inventors:
• **SONG, Sang Min**
  **Yongin-si Gyeonggi-do 16990 (KR)**
• **LEE, Ki Dong**
  **Seoul 07247 (KR)**
• **HAN, Chul Min**
  **Yongin-si Gyeonggi-do 17081 (KR)**

(74) Representative: **Brann AB**
**P.O. Box 3690**
**Sveavägen 63**
**103 59 Stockholm (SE)**

(54) **APPARATUS, METHOD, AND COMPUTER PROGRAM FOR SPH-BASED FLUID ANALYSIS SIMULATION**

(57)    A fluid analysis simulation apparatus based on smoothed particle hydrodynamics (SPH) includes a modeling unit that generates a mesh-based structure model composed of a plurality of polygons and a plurality of particles located inside the structure model, a polygon information generation unit that generates polygon information for each of the plurality of polygons, a cell information generation unit that partitions a space where the plurality of particles and the plurality of polygons exist into a plurality of cells and generates cell information for each of the plurality of cells, and a collision determination unit that determines a possibility of collision between a particle and a polygon based on data about the plurality of particles, the polygon information and the cell information.

*FIG. 1*

**Description**

**TECHNICAL FIELD**

The present disclosure relates to an apparatus, method, and computer program for SPH-based fluid analysis simulation.

**BACKGROUND**

Computational fluid dynamics (CFD) is a branch of fluid mechanics that uses computers to numerically calculate a dynamic flow of a fluid. CFD calculates the flow of a fluid by discretizing the Navier-Stokes equation, which is partial differential equation, through finite difference method (FDM), finite volume method (FVM), smoothed particle hydrodynamics (SPH) and the like.

There are two methods for calculating the Navier-Stokes equation: a grid-based method that discretizes a spatial domain into a small mesh or grid; and a particle-based method that expresses a fluid as a set of particles.

In the particle-based method, a more natural simulation of a natural or physical phenomenon is can be created by expressing an analysis target as particles instead of as a grid. Examples of particle-based methods include smoothed particle hydrodynamics (SPH), moving particle semi-implicit (MPS), lattice Boltzmann method (LBM) and the like.

In a fluid analysis based on smoothed particle hydrodynamics (SPH), which is one of the particle-based methods, unlike the grid-based method, grid generation is omitted, and, thus, the result of analysis can be simulated relatively quickly.

Also, since the SPH-based fluid analysis uses particles without generating a grid, a free surface such as liquid-gas interfaces can be analyzed relatively easily.

Further, a multiphase flow of two or more of gas, liquid and solid can be analyzed relatively accurately by the SPH-based fluid analysis.

Recently, due to these advantages, SPH has been widely used in simulating the flow of a fluid.

However, when determining a possibility of collision between a particle and a triangle in a mesh-based structure model composed of triangles, there is a problem in that an excessive number of calculations are required as the numbers of particles and triangles increase.

Meanwhile, Japanese Patent Laid-open Publication No. 2018-147315 discloses a configuration for detecting a polygon within a radius of influence of a fluid particle by modeling the boundary of a solid object as a polygon.

**DISCLOSURE OF THE INVENTION**

**PROBLEMS TO BE SOLVED BY THE INVENTION**

The present disclosure provides a fluid analysis simulation apparatus, method and computer program that can determine a possibility of collision between a particle and a triangle in a mesh-based structure model composed of triangles without slowing the speed.

However, the problems to be solved by the present disclosure are not limited to the above-described problems. There may be other problems to be solved by the present disclosure.

**MEANS FOR SOLVING THE PROBLEMS**

As a means for solving the problems, according to an aspect of the present disclosure, a fluid analysis simulation apparatus based on smoothed particle hydrodynamics (SPH) comprises a modeling unit that generates a mesh-based structure model composed of a plurality of polygons and a plurality of particles located inside the structure model, a polygon information generation unit that generates polygon information for each of the plurality of polygons, a cell information generation unit that partitions a space where the plurality of particles and the plurality of polygons exist into a plurality of cells and generates cell information for each of the plurality of cells, and a collision determination unit that determines a possibility of collision between a particle and a polygon based on data about the plurality of particles, the polygon information and the cell information.

In one embodiment, the polygon information generation unit standardizes the polygon so as to be included in a predetermined number of or less cells.

In one embodiment, the cell information generation unit generates a cell index based on a position of the cell in the space where the plurality of particles and the plurality of polygons exist, and the polygon information generation unit generates polygon reference information based on position information of the polygon and the cell index.

In one embodiment, the polygon information generation unit arranges the polygon reference information in ascending order based on the cell index.

In one embodiment, the cell information generation unit generates cell reference information based on the position information of the polygon and the cell index, and the cell reference information includes inclusive information which is generated based on the number of polygons included in a cell corresponding to each cell index.

In one embodiment, the cell reference information includes accumulative information which is generated based on the number of polygons included in a cell corresponding to a cell index prior to each cell index.

In one embodiment, the collision determination unit extracts a cell index of a cell including a particle for each of the plurality of particles based on position information of the particle, and determines the possibility of collision between a particle and a polygon based on the cell index of the cell including the particle, the cell reference information and the polygon reference information.

According to another aspect of the present disclosure, a fluid analysis simulation method based on smoothed particle hydrodynamics (SPH) comprises generating a mesh-based structure model composed of a plurality of polygons and a plurality of particles located inside the structure model, generating polygon information for each of the plurality of polygons, partitioning a space where the plurality of particles and the plurality of polygons exist into a plurality of cells, generating cell information for each of the plurality of cells, and determining a possibility of collision between a particle and a polygon based on data about the plurality of particles, the polygon information and the cell information.

According to yet another aspect of the present disclosure, a computer program stored in a medium including a sequence of instructions to perform a fluid analysis simulation based on smoothed particle hydrodynamics (SPH), wherein the computer program includes a sequence of instructions that, when executed by a computing device, cause the computing device to generate a mesh-based structure model composed of a plurality of polygons and a plurality of particles located inside the structure model, generate polygon information for each of the plurality of polygons, partition a space where the plurality of particles and the plurality of polygons exist into a plurality of cells, generate cell information for each of the plurality of cells, and determine a possibility of collision between a particle and a polygon based on data about the plurality of particles, the polygon information and the cell information.

The above-described aspects are provided by way of illustration only and should not be construed as liming the present disclosure. Besides the above-described embodiments, there may be additional embodiments described in the accompanying drawings and the detailed description.

## EFFECTS OF THE INVENTION

According to any one of the means for solving the problems of the present disclosure described above, it is possible to provide a fluid analysis simulation apparatus, method and computer program that can determine a possibility of collision between a particle and a triangle without slowing the speed.

Also, it is possible to reduce the cost and time for calculation for simulation of a complex structure, a wide space and the like.

Further, by determining the possibility of collision between a particle and a triangle and effectively predicting the movement of a fluid, the present disclosure can be applied to various technical fields.

## BRIEF DESCRIPTION OF THE DRAWINGS

FIG. 1 is a configuration diagram of a fluid analysis simulation apparatus according to an embodiment of the present disclosure.

FIG. 2 is a diagram for explaining a process for standardizing a polygon according to an embodiment of the present disclosure.

FIG. 3 shows an example of a process for generating polygon reference information according to an embodiment of the present disclosure.

FIG. 4 shows an example of a process for generating cell reference information according to an embodiment of the present disclosure.

FIG. 5 is a diagram for explaining a method for determining a possibility of collision between a particle and a polygon according to an embodiment of the present disclosure.

FIG. 6 is a diagram for explaining a method for determining a possibility of collision between a particle and a polygon according to an embodiment of the present disclosure.

FIG. 7 is a flowchart of a fluid analysis simulation method according to an embodiment of the present disclosure.

**BEST MODE FOR CARRYING OUT THE INVENTION**

Hereafter, embodiments of the present disclosure will be described in detail with reference to the accompanying drawings so that the present disclosure may be readily implemented by a person with ordinary skill in the art. However, it is to be noted that the present disclosure is not limited to the embodiments but may be embodied in various other ways. In drawings, parts irrelevant to the description are omitted for the simplicity of explanation, and like reference numerals denote like parts through the whole document.

Throughout this document, the term "connected to" may be used to designate a connection or coupling of one element to another element and includes both an element being "directly connected" another element and an element being "electronically connected" to another element via another element. Further, it is to be understood that the terms "comprises," "includes," "comprising," and/or "including" means that one or more other components, steps, operations, and/or elements are not excluded from the described and recited systems, devices, apparatuses, and methods unless context dictates otherwise; and is not intended to preclude the possibility that one or more other components, steps, operations, parts, or combinations thereof may exist or may be added.

Throughout this document, the term "unit" may refer to a unit implemented by hardware, software, and/or a combination thereof. As examples only, one unit may be implemented by two or more pieces of hardware or two or more units may be implemented by one piece of hardware. However, the "unit" is not limited to the software or the hardware and may be stored in an addressable storage medium or may be configured to implement one or more processors. Accordingly, the "unit" may include, for example, software, object-oriented software, classes, tasks, processes, functions, attributes, procedures, sub-routines, segments of program codes, drivers, firmware, micro codes, circuits, data, database, data structures, tables, arrays, variables and the like. The components and functions provided by the "units" can be combined with each other or can be divided up into additional components. Further, the components and the "units" may be configured to implement one or more CPUs in a device or a secure multimedia card.

Throughout this document, a part of an operation or function described as being carried out by a terminal or device may be implemented or executed by a server connected to the terminal or device. Likewise, a part of an operation or function described as being implemented or executed by a server may be so implemented or executed by a terminal or device connected to the server.

Hereinafter, embodiments of the present disclosure will be explained in detail with reference to the accompanying drawings.

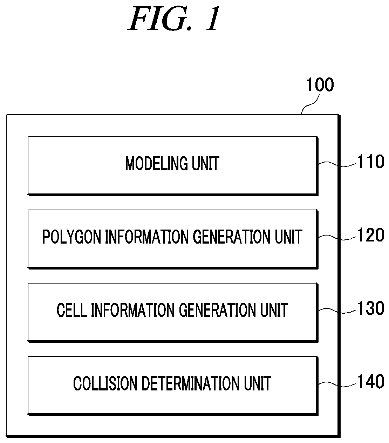

**FIG. 1** is a configuration diagram of a fluid analysis simulation apparatus according to an embodiment of the present disclosure. Referring to **FIG. 1,** a fluid analysis simulation apparatus 100 may include a modeling unit 110, a polygon information generation unit 120, a cell information generation unit 130 and a collision determination unit 140.

The fluid analysis simulation apparatus 100 may include a server, a desktop, a laptop computer, a kiosk, a smartphone and a tablet PC. However, the fluid analysis simulation apparatus 100 is not construed to be limited to these examples. That is, the fluid analysis simulation apparatus 100 may include all devices equipped with a processor for performing an SPH-based fluid analysis simulation method to be described later.

The fluid analysis simulation apparatus 100 performs a 3D flow analysis on a fluid. That is, the fluid analysis simulation apparatus 100 models a 3D simulation area and a plurality of particles located in the 3D simulation area, and analyzes the flow of the plurality of particles in the 3D simulation area. However, in the present disclosure, for the convenience of description, the simulation area and particles are expressed in two dimensions.

The fluid analysis simulation apparatus 100 may perform a simulation for analyzing a fluid based on smoothed particle hydrodynamics (SPH). SPH is one of the particle-based fluid analysis techniques that can be used in computational fluid dynamics (CFD). In order to simulate the movement of a fluid, which is an analysis target, SPH can express the fluid as one or more particles. SPH can calculate a physical quantity of a particle while tracking each particle and perform a fluid analysis simulation based on the result of calculation.

The fluid analysis simulation apparatus 100 may further include an input unit (not shown). The input unit may receive data about a plurality of particles and a plurality of polygons for fluid analysis simulation. For example, the input unit may receive data about a plurality of particles and a plurality of polygons from an external device such as a user device.

The input unit may receive data about a plurality of particles and a plurality of polygons through communication with an external server. The data about a plurality of particles may include information about an analysis target required to perform a fluid analysis simulation. The data about a plurality of particles may include information about physical properties of each particle, for example, at least one of the radius, mass, density, viscosity, velocity, acceleration and position of each particle.

The modeling unit 110 may generate a mesh-based structure model composed of a plurality of polygons and a plurality of particles located inside the structure model. The modeling unit 110 may generate a mesh-based structure model composed of a plurality of polygons based on the shape and position of each polygon.

The modeling unit 110 may generate a mesh-based structure model composed of, for example, a plurality of triangles. The modeling unit 110 may generate a plurality of particles based on the position (center coordinate) and particle radius of each particle. In the present disclosure, the mesh-based structure model is sometimes described as being composed of triangles, but is not limited thereto.

The polygon information generation unit 120 may generate polygon information for each of the plurality of polygons. The polygon information generation unit 120 may generate triangle indexes, which are unique numbers assigned to the plurality of respective triangles. For example, if three triangles exist in the space, one of numbers 0, 1 and 2 may be sequentially assigned to each triangle to generate triangle indexes.

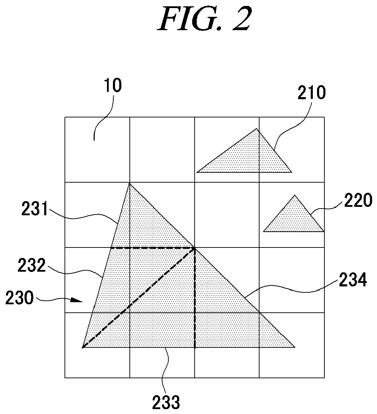

The cell information generation unit 130 may partition a space where the plurality of particles and the plurality of polygons exist into a plurality of cells. Referring to FIG. 2, the cell information generation unit 130 may partition a space where the plurality of particles and the plurality of polygons exist into a plurality of cells 10. The cell information generation unit 130 may determine the size of the cell 10 based on the particle radius. The cell 10 serves as a criterion for standardizing a polygon and determining a possibility of collision between a particle and a polygon, which will be described later.

The cell information generation unit 130 may generate cell information for each of the plurality of cells. The cell information generation unit 130 may generate a cell index based on the position of a cell in the space where the plurality of particles and the plurality of polygons exist.

The cell information generation unit 130 may generate cell indexes, which are unique numbers assigned to the plurality of respective cells. For example, if the space is partitioned into four cells, one of numbers 0, 1 and 2 may be sequentially assigned to each cell to generate cell indexes based on the position of the cell in the space.

The polygon information generation unit 120 may standardize a polygon so as to be included in a predetermined number of or less cells. The polygon information generation unit 120 may standardize each triangle so as to be included in a predetermined number of or less cells. For example, the polygon information generation unit 120 may standardize each triangle so as to be included in four or less cells.

**FIG. 2** is a diagram for explaining a process for standardizing a polygon according to an embodiment of the present disclosure.

Referring to **FIG. 2,** a plurality of triangles 210, 220 and 230 exists in the space partitioned by the plurality of cells 10. Depending on the shape and position of each triangle, the triangle 210 is included in a total of two cells and the triangle 220 is included in one cell. In contrast, the triangle 230 is included in a total of nine cells. The polygon information generation unit 120 may standardize the triangle 230 so as to be included in four or less cells. Accordingly, the triangle 230 may be divided into a plurality of triangles 231 to 234 each included in four or less cells.

The polygon information generation unit 120 may generate a triangle index based on the standardized triangle. For example, in the example shown in **FIG. 2,** one of numbers 0, 1, 2, 3, 4 and 5 may be sequentially assigned to the each of the respective triangles 210, 220, 231, 232, 233 and 234 to generate triangle indexes.

The polygon information generation unit 120 may generate polygon reference information based on position information of a polygon and a cell index. The polygon information generation unit 120 may generate triangle reference information based on position information of a triangle and a cell index. The triangle reference information may include, for example, a triangle index and cell indexes of all cells where a triangle corresponding to the triangle index is included.

Before generating the polygon reference information, the polygon information generation unit 120 may secure a memory based on the total number of polygons and a maximum value of the number of cells where a polygon can be included, i.e., the number of cells, which is a criterion for standardizing a polygon. For example, the polygon information generation unit 120 may secure a memory that can store information corresponding to four times the total number of triangles. The triangle reference information corresponding to one triangle may use a memory that stores four pieces of information.

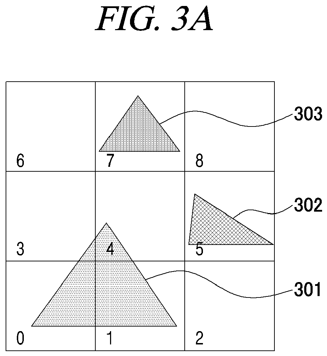

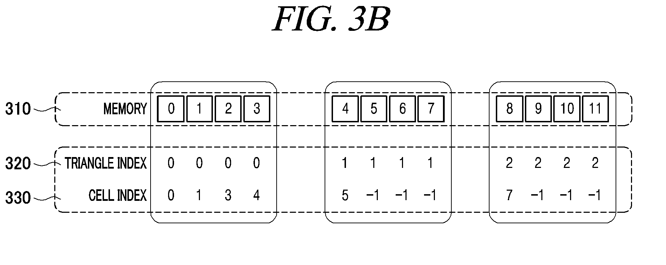

**FIG. 3A** and **FIG. 3B** are diagrams for explaining a process for generating triangle reference information. Referring to **FIG. 3A,** cell indexes are generated by sequentially assigning one of numbers 0 to 8 to each cell, and three triangles 301, 302 and 303 exist in a space partitioned by cells.

In this case, as shown in **FIG. 3B,** the polygon information generation unit 120 may secure a memory 310 that can store twelve pieces of information corresponding to four times the total number of triangles before generating the triangle reference information.

Referring back to **FIG. 3A,** the polygon information generation unit 120 may generate triangle indexes, which are unique numbers assigned to the plurality of respective triangles. The polygon information generation unit 120 may generate triangle indexes by assigning numbers to the respective triangles, such as 0 to the triangle 301, 1 to the triangle 302 and 2 to the triangle 303.

Referring back to **FIG. 3B,** the polygon information generation unit 120 may generate triangle reference information including a triangle index 320 and cell indexes 330 of all cells including a triangle corresponding to the triangle index 320.

For example, the polygon information generation unit 120 may generate triangle reference information, which includes triangle indexes 0, 0, 0 and 0 and cell indexes 0, 1, 3 and 4, for the triangle 301.

If a triangle is included in less than four cells, the polygon information generation unit 120 may generate triangle reference information including a value of "-1" in cell indexes of cells including the triangle. For example, the polygon information generation unit 120 may generate triangle reference information, which includes triangle indexes 1, 1, 1 and 1 and cell indexes 5, -1, -1 and -1, for the triangle 302.

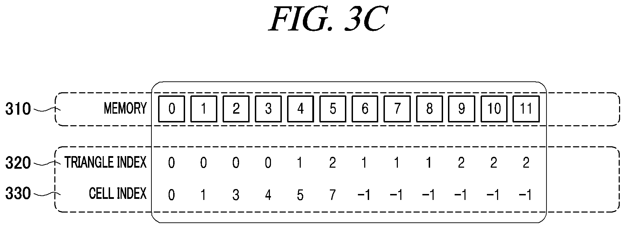

The polygon information generation unit 120 may arrange the polygon reference information in ascending order based on the cell indexes. Referring to **FIG. 3C,** the polygon information generation unit 120 may arrange triangle reference information for each of a plurality of triangles stored in the memory 310 in ascending order based on the cell indexes 330 of 0 and 1 or more. In this case, information including a value of "-1" is arranged at the last position.

The cell information generation unit 130 may generate cell reference information based on position information of a polygon and a cell index. The cell reference information may include inclusive information and accumulative information.

Before generating the cell reference information, the cell information generation unit 130 may secure a memory based on the total number of cells. For example, the cell information generation unit 130 may secure a memory that can store information corresponding to the total number of cells. The cell reference information corresponding to one cell may use a memory that stores one piece of information.

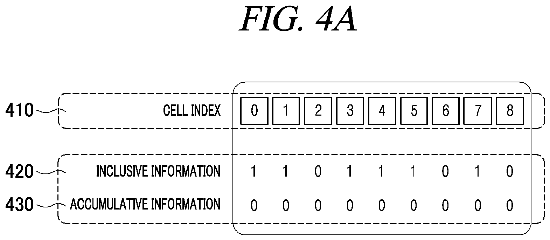

The inclusive information may be generated based on the number of polygons included in a cell corresponding to each cell index. Referring to **FIG. 3A** and **FIG. 4A,** the cell information generation unit 130 may secure a memory that can store nine pieces of information corresponding in number to the total number of cells. The cell information generation unit 130 may generate inclusive information based on the number of triangles included in a cell corresponding to each cell index 410. For example, one triangle is included in a cell corresponding to a cell index 0, and, thus, "1" may be generated as the inclusive information.

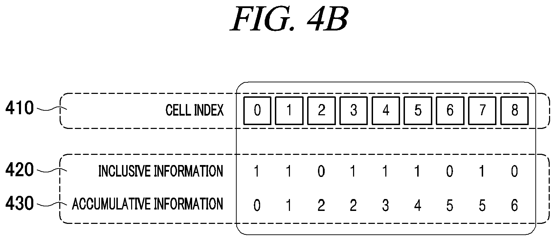

The accumulative information may be generated based on the number of polygons included in a cell corresponding to a cell index prior to each cell index. Referring to **FIG. 3A** and **FIG. 4B,** the cell information generation unit 130 may generate accumulative information based on the number of triangles included in a cell corresponding to a cell index prior to each cell index 410. For example, one triangle is included in a cell corresponding to a cell index, i.e., the cell index 0, prior to a cell index 2 and one triangle is included in a cell corresponding to a cell index 1, and, thus, "2" may be generated as accumulative information of the cell index 2.

The cell information generation unit 130 may generate accumulative information of a specific cell, which will be described later, based on inclusive information and accumulative information of a cell index of a cell prior to the specific cell. For example, the accumulative information of the cell index 2 may be derived from the sum of inclusive information and accumulative information of the cell index 1. For example, accumulative information of a cell index 5 may be derived from the sum of inclusive information and accumulative information of a cell index 4.

As will described later, the accumulative information is used to easily search for a triangle (triangle with a possibility of collision) located in the same cell as a particle to be counted.

The collision determination unit 140 may determine a possibility of collision between a particle and a polygon based on data about the plurality of particles, the polygon information and the cell information. The collision determination unit 140 may determine that a particle and a triangle included in the same cell have a possibility of collision.

The collision determination unit 140 may extract a cell index of a cell including a particle for each of the plurality of particles based on position information of the particle. The collision determination unit 140 may determine the possibility of collision between a particle and a polygon based on the cell index of the cell including the particle, the cell reference information and the polygon reference information.

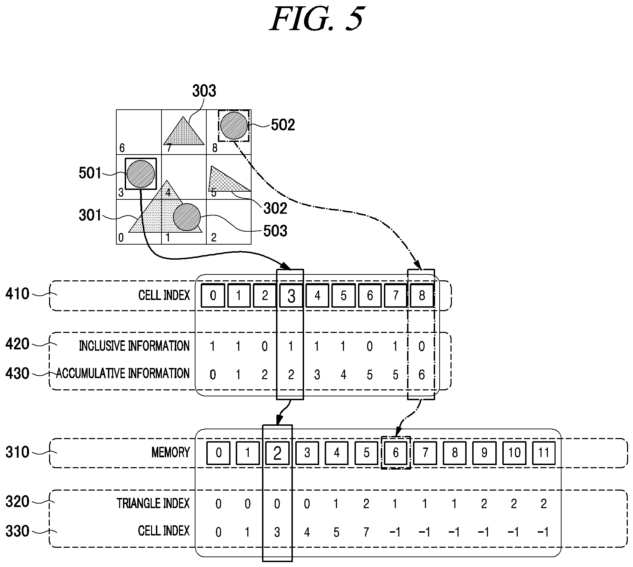

**FIG. 5** is a diagram for explaining a method for determining the possibility of collision between a particle and a polygon according to an embodiment of the present disclosure. Referring to **FIG. 5,** the fluid analysis simulation apparatus 100 may receive data about a plurality of particles 501 to 503 and a plurality of triangles 301 to 303, and generate triangle reference information and cell reference information based on the received data. Triangle indexes may be generated by assigning, for example, 0 to the triangle 301, 1 to the triangle 302 and 2 to the triangle 303.

For example, the fluid analysis and simulation apparatus 100 may determine a possibility of collision between the particle 501 and a triangle as follows. The fluid analysis simulation apparatus 100 may extract a cell index "3" of a cell including the particle 501 based on position information of the particle 501. The fluid analysis simulation apparatus 100 may refer to 1 as inclusive information of the cell index 3 and 2 as accumulative information of the cell index 3 from the cell reference information. Herein, 2 as the accumulative information indicates that two triangles exist in a plurality of cells corresponding to cell indexes (i.e., cell indexes 0 and 1) prior to the cell index 3. Accordingly, the fluid analysis simulation apparatus 100 may identify a triangle with a possibility of collision with the particle 501 included in the same cell as the particle 501.

Specifically, the fluid analysis simulation apparatus 100 may identify that there is one triangle corresponding to the cell index 3 based on 1 as the inclusive information, and identify the position of a memory, which includes information of the one triangle corresponding to the cell index 3, based on 2 as the accumulative information.

That is, the fluid analysis simulation apparatus 100 may identify the position of a memory 2, which includes information about a third triangle present in the cell index 3, based on 1 as the inclusive information and 2 as the accumulative information, and extract a triangle index 0 of the third triangle from the memory 2. Accordingly, the fluid analysis simulation apparatus 100 may identify that the triangle with a possibility of collision with the particle 501 is the triangle 301 having the triangle index 0.

For example, the fluid analysis simulation apparatus 100 may determine a possibility of collision between the particle 502 and a triangle as follows. The fluid analysis simulation apparatus 100 may extract a cell index "8" of a cell including the particle 502 based on position information of the particle 502. The fluid analysis simulation apparatus 100 may refer to 0 as inclusive information of the cell index 8 and 6 as accumulative information of the cell index 8 from the cell reference information. Herein, 6 as the accumulative information indicates that six triangles exist in a plurality of cells corresponding to cell indexes (*i.e.*, cell indexes 0 to 7) prior to the cell index 8. Accordingly, the fluid analysis simulation apparatus 100 may identify that there is no triangle with a possibility of collision with the particle 502 included in the same cell as the particle 502.

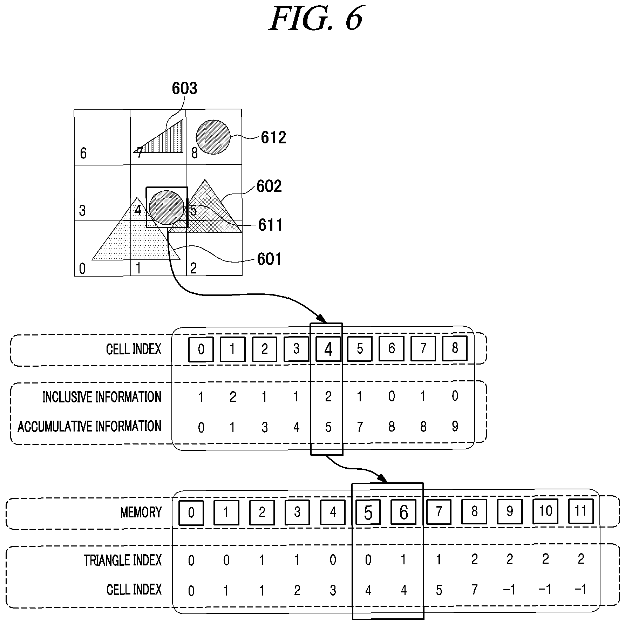

**FIG. 6** shows an example where a particle has the possibility to collide with a plurality of triangles. Referring to **FIG. 6,** the fluid analysis simulation apparatus 100 may receive data about a plurality of particles 611 and 612 and a plurality of triangles 601 to 603, and generate triangle reference information and cell reference information based on the received data. Triangle indexes may be generated by assigning, for example, 0 to the triangle 601, 1 to the triangle 602 and 2 to the triangle 603.

For example, the fluid analysis and simulation apparatus 100 may determine a possibility of collision between the particle 611 and a triangle as follows. The fluid analysis simulation apparatus 100 may extract a cell index "4" of a cell including the particle 611 based on position information of the particle 611. The fluid analysis simulation apparatus 100 may refer to 2 as inclusive information of the cell index 4 and 5 as accumulative information of the cell index 4 from the cell reference information. Accordingly, the fluid analysis simulation apparatus 100 may identify that there are two triangles with a possibility of collision with the particle 611 included in the same cell as the particle 611.

Also, the fluid analysis simulation apparatus 100 may identify triangle indexes 0 and 1 by checking triangle reference information of the two triangles from 5, which is the accumulative information of the cell index 4. That is, the fluid analysis simulation apparatus 100 may identify that the triangles with a possibility of collision with the particle 611 are the triangle 601 having the triangle index 0 and the triangle 602 having the triangle index 1.

As described above, the fluid analysis and simulation apparatus 100 may use inclusive information and accumulative information when determining a possibility of collision between a particle and a triangle. That is, triangle reference information is arranged in ascending order based on a cell index and accumulative information is generated based on the number of triangles included in a cell corresponding to a cell index prior to each cell index, and, thus, the fluid analysis simulation apparatus 100 may easily identify a triangle included in a cell including the particle by using the inclusive information and the accumulative information.

More specifically, in order to search for a triangle located in a cell including a particle, the fluid analysis simulation apparatus 100 may identify a memory which includes information about the triangle located in the cell by using inclusive information and accumulative information without a need to search all memories including the information of the triangle. Also, the fluid analysis simulation apparatus 100 may identify the information about the triangle located in the cell by searching only the memory. Therefore, the processing speed of the fluid analysis and simulation apparatus 100 can be significantly improved.

The fluid analysis simulation apparatus 100 may further include a non-illustrated flow data calculation unit.

The flow data calculation unit may use an SPH algorithm to calculate flow data caused by collisions between each particle and neighboring particles or collisions between each particle and polygons constituting a structure model, and may perform a fluid analysis simulation based on the flow data.

The SPH algorithm calculates the flow of each particle by using physical property information (*e.g.*, mass, velocity, viscosity and acceleration) of each particle, and the physical property information of each particle is interpolated by using a set of kernel functions such as a radial basis function centered at the position of each particle.

Interpolating the physical property information of each particle as described above generates continuous fields such as a pressure field and a viscosity field that can be used to calculate the dynamics of the fluid using standard equations such as the Navier-Stokes equation.

For example, the Navier-Stokes equation models the fluid as follows.

[Equation 1]

$$\rho\left(\left(\frac{\partial v}{\partial t}\right) + \mathrm{v} \cdot \nabla \mathrm{v}\right) = \rho\mathrm{g} - \nabla\mathrm{p} + \mu\nabla^2 v$$

In Equation 1, "v" denotes a velocity of a particle, "p" denotes a density of the particle, "p" denotes a pressure on the particle, "g" denotes gravity and "μ" denotes a viscosity coefficient of the fluid.

Meanwhile, according to the SPH algorithm, the density of each particle is derived by Equation 2.

[Equation 2]

$$\rho(x_i) = \sum_j m_j W(x_i - x_j, h)$$

Also, the pressure force on each particle is derived by Equation 3.

[Equation 3]

$$f_i^{pressure} = -\sum_j m_j \frac{p_i + p_j}{2\rho_j} \nabla W(x_i - x_j, h)$$

Further, the viscosity force of each particle is derived by Equation 4.

[Equation 4]

$$f_i^{viscosity} = \mu \sum_j m_j \frac{v_j - v_i}{\rho_j} \nabla^2 W(x_i - x_j, h)$$

The flow data calculation unit calculates changes in flow data such as density, pressure and viscosity of each particle by using the SPH algorithm. For example, the flow data calculation unit calculates flow data of each particle in a next time step (first time step) based on initial flow data of each particle, and calculates the flow of each particle based on the calculated flow data.

Then, the flow data calculation unit calculates flow data of each particle in a next time step based on the flow data of each particle in the first time step, and calculates the flow of each particle based on the calculated flow data.

The flow data calculation unit may perform the fluid analysis simulation by calculating the flow data of each particle in each time step and calculating the flow of each particle.

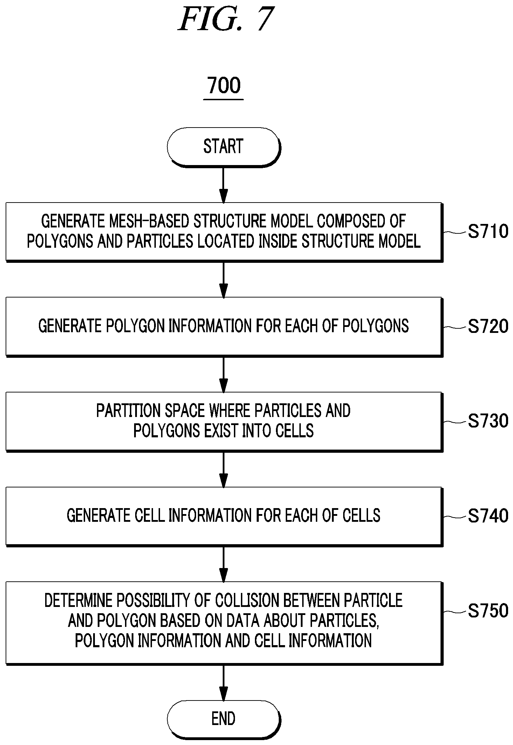

**FIG. 7** is a flowchart of a fluid analysis simulation method according to an embodiment of the present disclosure. A fluid analysis simulation method 700 to be performed by the apparatus 100 illustrated in **FIG. 7** includes the processes time-sequentially performed by the apparatus 100 according to the embodiment illustrated in **FIG. 1.** Therefore, the descriptions of the processes may also be applied to the fluid analysis simulation method to be performed by the apparatus 100 according to the embodiment illustrated in **FIG. 1** even though they are omitted herei nafter.

In a process S710, the fluid analysis simulation apparatus 100 may generate a mesh-based structure model composed of a plurality of polygons and a plurality of particles located inside the structure model.

In a process S720, the fluid analysis simulation apparatus 100 may generate polygon information for each of the plurality of polygons.

In a process S730, the fluid analysis simulation apparatus 100 may partition a space where the plurality of particles and the plurality of polygons exist into a plurality of cells.

In a process S740, the fluid analysis simulation apparatus 100 may generate cell information for each of the plurality of cells.

In a process S750, the fluid analysis and simulation apparatus 100 may determine a possibility of collision between a particle and a polygon based on data about the plurality of particles, the polygon information and the cell information.

In the descriptions above, the processes S710 to S750 may be divided into additional processes or combined into fewer processes depending on an embodiment. In addition, some of the processes may be omitted and the sequence of the processes may be changed if necessary.

The method for performing fluid analysis simulation on basis of SPH by the fluid analysis simulation apparatus described above with reference to **FIG. 1** to **FIG. 7** can be implemented in a computer program stored in a medium to be executed by a computer or a storage medium including instructions codes executable by a computer. Also, the method for performing fluid analysis simulation on basis of SPH by the fluid analysis simulation apparatus described above with reference to **FIG. 1** to **FIG. 7** can be implemented in a computer program stored in a medium to be executed by a computer.

A computer-readable medium can be any usable medium which can be accessed by the computer and includes all volatile/non-volatile and removable/non-removable media. Further, the computer-readable medium may include all computer storage and communication media. The computer storage medium includes all volatile/non-volatile and removable/non-removable media embodied by a certain method or technology for storing information such as computer-readable instruction code, a data structure, a program module or other data. The communication medium typically includes the computer-readable instruction code, the data structure, the program module, or other data of a modulated data signal such as a carrier wave, or other transmission mechanism, and includes a certain information transmission medium.

The above description of the present disclosure is provided for the purpose of illustration, and it would be understood by those skilled in the art that various changes and modifications may be made without changing technical conception and essential features of the present disclosure. Thus, it is clear that the above-described embodiments are illustrative in all aspects and do not limit the present disclosure. For example, each component described to be of a single type can be implemented in a distributed manner. Likewise, components described to be distributed can be implemented in a combined manner.

The scope of the present disclosure is defined by the following claims rather than by the detailed description of the embodiment. It shall be understood that all modifications and embodiments conceived from the meaning and scope of the claims and their equivalents are included in the scope of the present disclosure.

**Claims**

1. A fluid analysis simulation apparatus based on smoothed particle hydrodynamics (SPH), comprising:

   a modeling unit that generates a mesh-based structure model composed of a plurality of polygons and a plurality of particles located inside the structure model;
   a polygon information generation unit that generates polygon information for each of the plurality of polygons;
   a cell information generation unit that partitions a space where the plurality of particles and the plurality of polygons exist into a plurality of cells and generates cell information for each of the plurality of cells; and
   a collision determination unit that determines a possibility of collision between a particle and a polygon based on data about the plurality of particles, the polygon information and the cell information.

2. The fluid analysis simulation apparatus of Claim 1,
   wherein the polygon information generation unit standardizes the polygon so as to be included in a predetermined number of or less cells.

3. The fluid analysis simulation apparatus of Claim 2,

   wherein the cell information generation unit generates a cell index based on a position of the cell in the space where the plurality of particles and the plurality of polygons exist, and
   the polygon information generation unit generates polygon reference information based on position information of the polygon and the cell index.

4. The fluid analysis simulation apparatus of Claim 3,
   wherein the polygon information generation unit arranges the polygon reference information in ascending order based on the cell index.

5. The fluid analysis simulation apparatus of Claim 3,

   wherein the cell information generation unit generates cell reference information based on the position information of the polygon and the cell index, and
   the cell reference information includes inclusive information which is generated based on the number of polygons included in a cell corresponding to each cell index.

6. The fluid analysis simulation apparatus of Claim 5,
   wherein the cell reference information includes accumulative information which is generated based on the number of polygons included in a cell corresponding to a cell index prior to each cell index.

7. The fluid analysis simulation apparatus of Claim 6,
   wherein the collision determination unit extracts a cell index of a cell including a particle for each of the plurality of particles based on position information of the particle, and determines the possibility of collision between a particle and a polygon based on the cell index of the cell including the particle, the cell reference information and the polygon reference information.

8. A fluid analysis simulation method based on smoothed particle hydrodynamics (SPH), comprising:

   generating a mesh-based structure model composed of a plurality of polygons and a plurality of particles located inside the structure model;
   generating polygon information for each of the plurality of polygons;
   partitioning a space where the plurality of particles and the plurality of polygons exist into a plurality of cells;
   generating cell information for each of the plurality of cells; and
   determining a possibility of collision between a particle and a polygon based on data about the plurality of particles, the polygon information and the cell information.

9. The fluid analysis simulation method of Claim 8,
   wherein the generating polygon information includes standardizing the polygon so as to be included in a predetermined number of or less cells.

10. The fluid analysis simulation method of Claim 9,

    wherein the generating cell information includes generating a cell index based on a position of the cell in the space where the plurality of particles and the plurality of polygons exist, and
    the generating polygon information includes generating polygon reference information based on position information of the polygon and the cell index.

11. The fluid analysis simulation method of Claim 10,
    wherein the generating polygon information includes arranging the polygon reference information in ascending order based on the cell index.

12. The fluid analysis simulation method of Claim 10,

    wherein the generating cell information includes generating cell reference information based on the position information of the polygon and the cell index, and
    the cell reference information includes inclusive information which is generated based on the number of polygons included in a cell corresponding to each cell index.

13. The fluid analysis simulation method of Claim 12,
    wherein the cell reference information includes accumulative information which is generated based on the number of polygons included in a cell corresponding to a cell index prior to each cell index.

14. The fluid analysis simulation method of Claim 13,
    wherein the determining a possibility of collision includes:

    extracting a cell index of a cell including a particle for each of the plurality of particles based on position information of the particle; and
    determining the possibility of collision between a particle and a polygon based on the cell index of the cell including the particle, the cell reference information and the polygon reference information.

15. A computer program stored in a medium including a sequence of instructions to perform a fluid analysis simulation based on smoothed particle hydrodynamics (SPH),
    wherein the computer program includes a sequence of instructions that, when executed by a computing device, cause the computing device to:

generate a mesh-based structure model composed of a plurality of polygons and a plurality of particles located inside the structure model;

generate polygon information for each of the plurality of polygons;

partition a space where the plurality of particles and the plurality of polygons exist into a plurality of cells;

generate cell information for each of the plurality of cells; and

determine a possibility of collision between a particle and a polygon based on data about the plurality of particles, the polygon information and the cell information.

## FIG. 1

100

| MODELING UNIT | 110 |
| POLYGON INFORMATION GENERATION UNIT | 120 |
| CELL INFORMATION GENERATION UNIT | 130 |
| COLLISION DETERMINATION UNIT | 140 |

# FIG. 2

# FIG. 3A

# FIG. 3B

| | | | | | | | | | | | | | |
|---|---|---|---|---|---|---|---|---|---|---|---|---|---|
| 310 | MEMORY | 0 | 1 | 2 | 3 | | 4 | 5 | 6 | 7 | | 8 | 9 | 10 | 11 |

| | | | | | | | | | | | | | |
|---|---|---|---|---|---|---|---|---|---|---|
| 320 | TRIANGLE INDEX | 0 | 0 | 0 | 0 | 1 | 1 | 1 | 1 | 2 | 2 | 2 | 2 |
| 330 | CELL INDEX | 0 | 1 | 3 | 4 | 5 | −1 | −1 | −1 | 7 | −1 | −1 | −1 |

*FIG. 3C*

| | MEMORY | 0 | 1 | 2 | 3 | 4 | 5 | 6 | 7 | 8 | 9 | 10 | 11 |
|---|---|---|---|---|---|---|---|---|---|---|---|---|---|
| 310 | | | | | | | | | | | | | | |
| 320 | TRIANGLE INDEX | 0 | 0 | 0 | 0 | 1 | 2 | 1 | 1 | 1 | 2 | 2 | 2 |
| 330 | CELL INDEX | 0 | 1 | 3 | 4 | 5 | 7 | -1 | -1 | -1 | -1 | -1 | -1 |

# FIG. 4A

| | CELL INDEX | 0 | 1 | 2 | 3 | 4 | 5 | 6 | 7 | 8 |
|---|---|---|---|---|---|---|---|---|---|---|
| 410 | | | | | | | | | | |

| | | 0 | 1 | 2 | 3 | 4 | 5 | 6 | 7 | 8 |
|---|---|---|---|---|---|---|---|---|---|---|
| 420 | INCLUSIVE INFORMATION | 1 | 1 | 0 | 1 | 1 | 1 | 0 | 1 | 0 |
| 430 | ACCUMULATIVE INFORMATION | 0 | 0 | 0 | 0 | 0 | 0 | 0 | 0 | 0 |

# FIG. 4B

| 410 | CELL INDEX | 0 | 1 | 2 | 3 | 4 | 5 | 6 | 7 | 8 |
|---|---|---|---|---|---|---|---|---|---|---|
| 420 | INCLUSIVE INFORMATION | 1 | 1 | 0 | 1 | 1 | 1 | 0 | 1 | 0 |
| 430 | ACCUMULATIVE INFORMATION | 0 | 1 | 2 | 2 | 3 | 4 | 5 | 5 | 6 |

# FIG. 5

# FIG. 6

# FIG. 7

<u>700</u>

START

GENERATE MESH-BASED STRUCTURE MODEL COMPOSED OF POLYGONS AND PARTICLES LOCATED INSIDE STRUCTURE MODEL ⟶ S710

GENERATE POLYGON INFORMATION FOR EACH OF POLYGONS ⟶ S720

PARTITION SPACE WHERE PARTICLES AND POLYGONS EXIST INTO CELLS ⟶ S730

GENERATE CELL INFORMATION FOR EACH OF CELLS ⟶ S740

DETERMINE POSSIBILITY OF COLLISION BETWEEN PARTICLE AND POLYGON BASED ON DATA ABOUT PARTICLES, POLYGON INFORMATION AND CELL INFORMATION ⟶ S750

END

## INTERNATIONAL SEARCH REPORT

| | International application No. |
|---|---|
| | **PCT/KR2019/018580** |

**A. CLASSIFICATION OF SUBJECT MATTER**

*G06F 30/00(2020.01)i*

According to International Patent Classification (IPC) or to both national classification and IPC

**B. FIELDS SEARCHED**

Minimum documentation searched (classification system followed by classification symbols)
G06F 30/00; G06F 17/13; G06F 19/00; G06Q 10/04; G06Q 50/26; G06T 19/00

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal) & Keywords: SPH(smoothed-particle hydrodynamics), fluid, analysis, simulation, polygon, cell, particle, collision

**C. DOCUMENTS CONSIDERED TO BE RELEVANT**

| Category* | Citation of document, with indication, where appropriate, of the relevant passages | Relevant to claim No. |
|---|---|---|
| Y | JP 2008-262364 A (TOSHIBA CORP.) 30 October 2008<br>See paragraphs [0010]-[0017]; and claims 1 and 4. | 1-2,8-9,15 |
| A | | 3-7,10-14 |
| Y | JP 2004-054836 A (EBARA CORP.) 19 February 2004<br>See paragraphs [0004]-[0007]; and claim 1. | 1-2,8-9,15 |
| Y | KR 10-2012-0137828 A (KOREA ADVANCED INSTITUTE OF SCIENCE AND TECHNOLOGY) 24 December 2012<br>See paragraph [0005]; and claim 1. | 1-2,8-9,15 |
| A | JP 2013-175054 A (TOSHIBA CORP.) 05 September 2013<br>See paragraphs [0011]-[0013]; and claim 1. | 1-15 |
| A | KR 10-2012-0100419 A (FXGEAR INC.) 12 September 2012<br>See paragraphs [0006]-[0007]; and claims 1-8. | 1-15 |

| ☐ Further documents are listed in the continuation of Box C. | ☒ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 31 AUGUST 2020 (31.08.2020) | **31 AUGUST 2020 (31.08.2020)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

International application No.

**PCT/KR2019/018580**

| Patent document cited in search report | Publication date | Patent family member | Publication date |
|---|---|---|---|
| JP 2008-262364 A | 30/10/2008 | None | |
| JP 2004-054836 A | 19/02/2004 | None | |
| KR 10-2012-0137828 A | 24/12/2012 | KR 10-1267627 B1 | 27/05/2013 |
| | | US 2012-0316848 A1 | 13/12/2012 |
| JP 2013-175054 A | 05/09/2013 | JP 5774520 B2 | 09/09/2015 |
| KR 10-2012-0100419 A | 12/09/2012 | KR 10-1244826 B1 | 19/03/2013 |

**EP 4 075 315 A1**

## REFERENCES CITED IN THE DESCRIPTION

**Patent documents cited in the description**

- JP 2018147315 A